# EUROPEAN PATENT SPECIFICATION

(11) **EP 4 306 285 B1**
(45) Date of publication and mention of the grant of the patent: **18.02.2026**
(21) Application number: 22382677.7
(22) Date of filing: 15.07.2022
(51) Int. Cl.: B29B 17/00, B29C 70/54, B29C 70/44, B29C 43/36

(54) **COMPOSITE PART MANUFACTURING METHOD**
HERSTELLUNGSVERFAHREN FÜR VERBUNDSTOFFTEILE
PROCÉDÉ DE FABRICATION DE PIÈCE COMPOSITE

(43) Date of publication of application: 17.01.2024
(73) Proprietor: Airbus Operations, S.L.U., 28906 Getafe (Madrid) (ES)
(72) Inventor: MIGUEZ CHARINES, Yolanda, 28906 Getafe (ES); CARRASCAL IGLESIAS, Asuncion, 28906 Getafe (ES); DÍAZ RABOSO, Irene, 28906 Getafe (ES); DE BENITO NAVARRO, Irache, 28906 Getafe (ES)
(74) Representative: Elzaburu S.L.P.

(56) References cited:
- EP-A1- 2 671 708
- US-A- 5 939 013
- US-A1- 2013 264 751

## Description

### FIELD OF THE INVENTION

The present invention is directed to the manufacture of a composite part. The manufacturing process comprises steps that allow a subsequent reuse of a breather fabric.

### BACKGROUND OF THE INVENTION

The composite material comprises plies that are usually of carbon or glass fiber. Said composite plies are cured and the composite part is formed.

Vacuum bagging is a clamping method that uses atmospheric pressure to hold the laminate in place until the resin cures. The composite part is cured under temperature, pressure and vacuum conditions. The composite part is cured when the resin vitrifies beyond the glass transition point under certain conditions. Pressure, which can be up to several atmospheres, keeps the laminate in place but also affects the speed of the chemical reaction that occurs in the curing cycle of the part and helps to minimize the porosity of the part. Vacuum is an important parameter for curing the composite part, as it allows to evacuate any air that may be trapped in the bag so that there are no pores/air inclusions in the laminate and also helps to maintain the position of the laminate. US5939013 A and EP2671708 A1 relate to composite manufacturing methods.

A vacuum bagging for a composite part usually comprises the following elements:
- A manufacturing tooling which is a mold on which the composite plies lie.
- A vacuum bag film.
- A sealing tape for sealing the vacuum bag film to the tooling.
- A breather fabric, configured to avoid the risk of porosity in the cured material. The breather fabric facilitates aeration, i.e., breathing, during curing. The breather fabric covers, i.e., lays or spread over, the composite material and may be located directly over the composite material or over a release film, if included, or over any other sheet located between the breather fabric and the plies of composite material.
- A release film, located in contact with the plies of composite material. The functions of the release film are to retain the resin during the curing process and to facilitate demolding and to protect the composite material from direct contact with the breather fabric.

Once the composite part has been cured, in an autoclave or in an oven, the vacuum bag film, the breather fabric and the release film are removed from the cured part, either manually or by automatic unwrapping, and normally discarded.

Reusable vacuum bag films are known. Said reusable bags are specially made of materials such as silicone.

Currently, the breather fabric used in the curing of aircraft parts inside the vacuum bag film is not reused for manufacturing subsequent composite parts.

### SUMMARY OF THE INVENTION

It is an object of the invention a composite part manufacturing method wherein the manufacturing method comprises a method according to claim 1.

Therefore, at the end of the manufacturing process of a first composite part, the removed and cleaned of residues breather fabric is transported, i.e., transferred to another place in which another manufacturing process is or is going to be performed. In an embodiment, the removed breather fabric may be transported and stored, and the same manufacturing tooling may be prepared for another manufacturing process. In an embodiment, the removed breather fabric may be transported to another manufacturing tooling and immediately reused or being stored until it is reused.

The claimed invention allows a reuse of the breather fabric in subsequent manufacturing processes of composite parts. Advantages of the reuse of the breather fabric are the following:
- Minimizing environmental impact through the reuse of auxiliary materials. For achieving this reuse, the breather fabric shall be handled properly, i.e., minimizing the risk of contamination and in turn allowing for the proper segregation of waste.
- Cost savings by reusing materials.

The reused breather fabric could be applied in the manufacture of composite parts of any part of the aircraft. Preferably, the parts may have an irregular or uneven profile. Irregular profile means other than a flat surface and/or constant thickness, i.e., varying from the straight or parallel.

After the curing cycle, the breather fabric may have lost part of its aeration, breathing, capacity and flexibility, but as previously stated, it can be used in those composite parts having an uneven surface. In these composite parts not having a uniform thickness and/or not having a flat surface, the uneven surface generates a vacuum path that allows the reuse of a breather fabric maybe having a lower aeration capacity.

Small resin residues may remain on the surface of the breather fabric due to breaks in the release film during or prior to curing. These areas, if any, with resin residues are removed, for instance, during storage of the material for reuse.

In an embodiment, it can be considered that the mentioned resin residues have to be removed only if they exceed a certain surface area. For instance, if the density is small, in the order of 1% or less of the surface of the breather fabric to be reused, the breather fabric is left as it is.

In a preferred embodiment, the manufacturing method minimizes the probability of contamination of the breather fabric, having a limited manual handling and providing automatic means.

### DESCRIPTION OF THE FIGURES

To complete the description and to provide for a better understanding of the invention, a set of drawings is provided. Said drawings form an integral part of the description and illustrate preferred embodiments of the invention. The drawings comprise the following figures.
Figure 1 shows a schematic cross-section of a composite laminate located on a manufacturing tooling and the arrangement of the vacuum bagging.
Figure 2 shows a perspective view of a vacuum bagging.
Figure 3 shows an embodiment of the removal of the breather fabric.
Figures 4 shows a schematic cross section of an embodiment of an irregular composite part and the arrangement of a reused breather fabric vacuum bagging process.

### DETAILED DESCRIPTION OF THE INVENTION

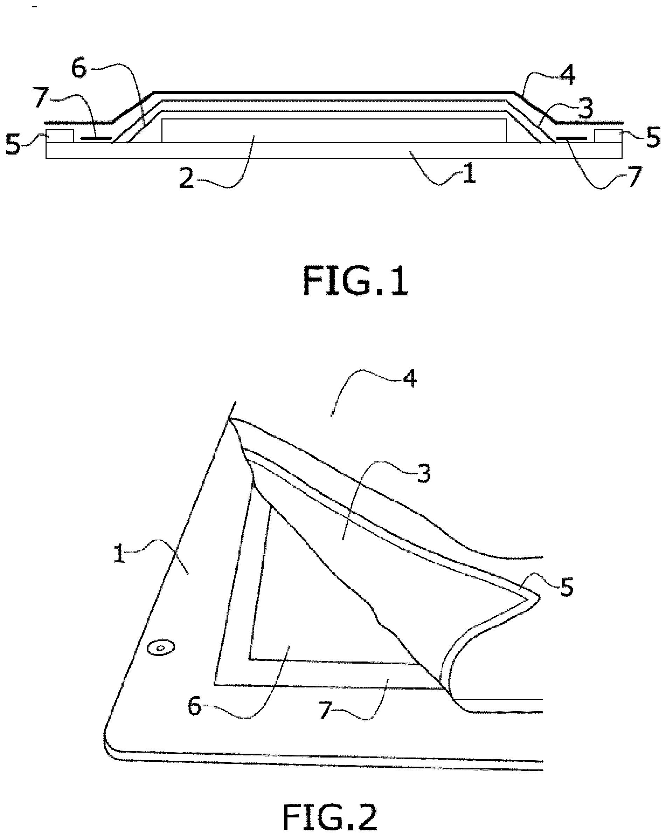

Figure 1 discloses a vacuum bagging for a composite part, the following elements are disclosed:
- a manufacturing tooling (1),
- the composite laminate (2) placed on the manufacturing tooling (1),
- the release film (6). More particularly, the release film (6) is located in contact with the plies of the composite laminate (2) and between the composite laminate (2) and the breather fabric (3),
- the breather fabric (3) covering the release film (6),
- the vacuum bag film (4) covering the composite laminate (2), the release film (6) and the breather fabric (3),
- a sealing tape (5) sealing the vacuum bag film (4) to the manufacturing tooling (1),
- an optional breather tape (7) located adjacent to the sealing tape (5) and covered by the vacuum bag film (4).

As previously stated, the manufacturing method object of the invention comprises the following consecutive steps:
- providing a manufacturing tooling (1),
- providing a composite laminate (2) on the manufacturing tooling (1),
- providing a release film (6) covering the composite laminate (2),
- providing a breather fabric (3) covering the release film (6),
- providing a vacuum bag film (4) covering the composite laminate (2), the release film (6) and the breather fabric (3),
- sealing the vacuum bag film (4) to the manufacturing tooling (1),
- curing the composite laminate (2),
- unsealing the vacuum bag film (4) from the manufacturing tooling (1),
- removing the vacuum bag film (4),
- removing the breather fabric (3),
- inspecting the breather fabric (3) to detect resin residues,
- if any, removing the resin residues from the breather fabric (3),
- transporting the removed breather fabric (3) to a manufacturing process of another composite part.

In an embodiment, the composite part manufacturing method comprises the step of providing a sealing tape (5) for sealing the vacuum bag film (4) to the manufacturing tooling (1). Preferably, the sealing tape (5) is positioned onto the manufacturing tooling (1) before providing the release film (6).

The release film (6) may be removed after removing the breather fabric (3) or after inspecting the breather fabric (3) to detect resin residues or after removing the resin residues from the breather fabric (3) or, preferably, after transporting the removed breather fabric (3) to the manufacturing process of another composite part.

According to the above described, in an embodiment the stage in which the vacuum bagging is performed comprises the following steps:
- providing a manufacturing tooling (1),
- positioning a composite laminate (2) on the manufacturing tooling (1),
- positioning the sealing tape (5) onto the manufacturing tooling (1),
- positioning the release film (6) onto the composite laminate (2),
- positioning the breather fabric (3) onto the release film (6) in order to facilitate aeration during the curing process,
- positioning the vacuum bag film (4) covering the previous structure, i.e., the composite laminate (2), the release film (6) and breather fabric (3),
- adhering the vacuum bag film (4) to the sealing tape (5) for the bag completion.

Afterwards, in an embodiment, a connection of vacuum intakes is done, and a vacuum leak test is performed to the above vacuum bagging structure. Finally, the complete set is load into an autoclave or oven and the composite part is cured.

After the curing stage, the vacuum bag film (4) is removed. In an embodiment, the following steps are performed:
- disconnection of the vacuum from the intakes,
- unloading of the above set from de autoclave or oven.
- unsealing the vacuum bag film (4) from the sealing tape (5),
- removing the vacuum bag film (4),
- removing the breather fabric (3) handling the material minimizing the risk of contamination by automatic means or assisted manual operation,
- inspecting the breather fabric (3) to detect resin residues,
- if any, removing the resin residues from the breather fabric (3),
- transporting the removed breather fabric (3) for the manufacturing process of another composite part,
- removing the release film (6).

In an embodiment, if the area with resin residues is approximately 1% or less of the area of the removed breather fabric (3), the resin residues are not removed.

In an embodiment, to minimize the risk of contamination of the breather fabric (3) during the removal of the material from the cured part and to be able to reuse it (3), the removal of the vacuum bag film (4) is performed automatically. It could be done manually but with assisted support to guarantee the non-contamination of the material.

Figure 2 discloses a perspective view of the arrangement of the different elements in a vacuum bagging. Specifically, the manufacturing tooling (1), the vacuum bag film (4), the breather fabric (3), the breather tape (7), the release film (6) and the sealing tape (5) are depicted.

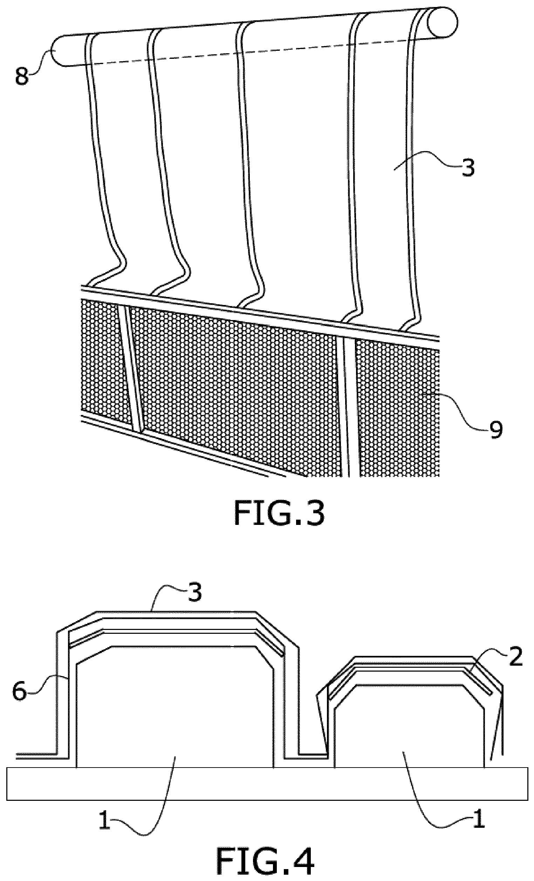

Figure 3 discloses an embodiment for removing the breather fabric (3). The step of removing the breather fabric (3) is performed automatically or manually rolling the breather fabric (3). Afterwards, the removed breather fabric (3) may be unrolled before being reused.

In the shown embodiment, the removal is done by automatic winding on a roller (8) that may be attached to a gantry crane which in turn has a translational movement along, for instance, a cradle axis.

In the shown embodiment, the removed breather fabric (3) is stored before being reused, for instance, in a container (9). Thus, the removed breather fabric (3) is transported to a manufacturing process of another composite part and stored until it is reused in said another manufacturing process. The removed breather fabric (3) can be used several times.

The vacuum bag film (4) is also manually removed or automatically removed. On their part, the release film (6) is also removed after removing the breather fabric (3). The removal may also be done by automatic winding on the roller (8) that is attached to the gantry crane.

In an embodiment, the removed breather fabric (3) is cut to fit the subsequent composite part to be cured. The cutting step may be carried out when storing the breather fabric (3), if it is stored, or when removing it (3).

As previously stated, the composite part of the manufacturing process of another composite part comprises an uneven surface that may generate a vacuum path that allows the reuse of a breather fabric (3) although it maybe has a lower aeration capacity.

## Claims

1. Composite part manufacturing method comprising the following consecutive steps:
- providing a manufacturing tooling (1),
- providing a composite laminate (2) on the manufacturing tooling (1),
- providing a release film (6) covering the composite laminate (2),
- providing a breather fabric (3) covering the release film (6), the breather fabric (3) configured for facilitating aeration during a curing process,
- providing a vacuum bag film (4) covering the composite laminate (2), the release film (6) and the breather fabric (3),
- sealing the vacuum bag film (4) to the manufacturing tooling (1),
- curing the composite laminate (2),
- unsealing the vacuum bag film (4) from the manufacturing tooling (1),
- removing the vacuum bag film (4),
- removing the breather fabric (3),
- inspecting the breather fabric (3) to detect resin residues,
- if any, removing the resin residues from the breather fabric (3),
- transporting the removed breather fabric (3) to a manufacturing process of another composite part,
**characterised in that**
the release film (6) is removed after transporting the removed breather fabric (3) to the manufacturing process of another composite part.

2. Composite part manufacturing method, according to claim 1, wherein it comprises the step of providing a sealing tape (5) for sealing the vacuum bag film (4) to the manufacturing tooling (1).

3. Composite part manufacturing method, according to claim 2, wherein the sealing tape (5) is positioned onto the manufacturing tooling (1) before providing the release film (6).

4. Composite part manufacturing method, according to any preceding claim, wherein the step of removing the breather fabric (3) is performed automatically or manually by rolling the breather fabric (3).

5. Composite part manufacturing method, according to claim 4, wherein the removed breather fabric (3) is unrolled before manufacturing the another composite part.

6. Composite part manufacturing method, according to claim 4 or 5, wherein the breather fabric (3) removal is done by automatic winding on a roller (8) attached to a gantry crane having a translational movement along an axis.

7. Composite part manufacturing method, according to any preceding claim, wherein the removed breather fabric (3) is stored before the another composite part is manufactured.

8. Composite part manufacturing method, according to any preceding claim, wherein the vacuum bag film (4) is automatically removed.

9. Composite part manufacturing method, according to any preceding claim, wherein the composite laminate (2) is cured in an autoclave or in an oven.

10. Composite part manufacturing method, according to any preceding claim, wherein if the area with resin residues is approximately 1% or less of the area of the removed breather fabric (3) the resin residues are not removed.

11. Composite part manufacturing method, according to any preceding claim, wherein the removed breather fabric (3) is cut to fit the another composite part to be manufactured, the cutting step being carried out when storing or during the removal of the breather fabric (3).

12. Composite part manufacturing method, according to any preceding claim, wherein the another composite part comprises an uneven surface.

## Patentansprüche

1. Verbundteil-Herstellungsverfahren umfassend die folgenden aufeinanderfolgenden Schritte:
- Bereitstellen eines Herstellungswerkzeugs (1),
- Bereitstellen eines Verbundlaminats (2) auf dem Herstellungswerkzeug (1),
- Bereitstellen einer Trennfolie (6), die das Verbundlaminat (2) bedeckt,
- Bereitstellen eines Lüftungsgewebes (3), das die Trennfolie (6) bedeckt, wobei das Lüftungsgewebe (3) dafür gestaltet ist, Lüftung während eines Härtungsvorgangs zu erleichtern,
- Bereitstellen einer Vakuumbeutelfolie (4), die das Verbundlaminat (2), die Trennfolie (6) und das Lüftungsgewebe (3) bedeckt,
- Abdichten der Vakuumbeutelfolie (4) an das Herstellungswerkzeug (1),
- Härten des Verbundlaminats (2),
- Lösen der Dichtung der Vakuumbeutelfolie (4) von dem Herstellungswerkzeug (1),
- Entfernen der Vakuumbeutelfolie (4),
- Entfernen des Lüftungsgewebes (3),
- Prüfen des Lüftungsgewebes (3) auf Harzrückstände;
- falls vorhanden, Entfernen der Harzrückstände von dem Lüftungsgewebe (3),
- Befördern des entfernten Lüftungsgewebes (3) zu einem Herstellungsverfahren eines weiteren Verbundteils,
**dadurch gekennzeichnet, dass** die Trennfolie (6) nach Befördern des entfernten Lüftungsgewebes (3) zu dem Herstellungsverfahren eines weiteren Verbundteils entfernt wird.

2. Verbundteil-Herstellungsverfahren nach Anspruch 1, umfassend den Schritt des Bereitstellens eines Dichtungsbands (5) zum Abdichten der Vakuumbeutelfolie (4) an das Herstellungswerkzeug (1).

3. Verbundteil-Herstellungsverfahren nach Anspruch 2, wobei das Dichtungsband (5) auf dem Herstellungswerkzeug (1) positioniert wird, bevor die Trennfolie (6) bereitgestellt wird.

4. Verbundteil-Herstellungsverfahren nach einem der vorstehenden Ansprüche, wobei der Schritt des Entfernens des Lüftungsgewebes (3) automatisch oder manuell durch Aufrollen des Lüftungsgewebes (3) durchgeführt wird.

5. Verbundteil-Herstellungsverfahren nach Anspruch 4, wobei das entfernte Lüftungsgewebe (3) vor der Herstellung des weiteren Verbundteils abgerollt wird.

6. Verbundteil-Herstellungsverfahren nach Anspruch 4 oder 5, wobei das Entfernen des Lüftungsgewebes (3) durch automatisches Aufwickeln auf eine Rolle (8), die an einem Portalkran mit einer Translationsbewegung entlang einer Achse befestigt ist, erfolgt.

7. Verbundteil-Herstellungsverfahren nach einem der vorstehenden Ansprüche, wobei das entfernte Lüftungsgewebe (3) gelagert wird, bevor das weitere Verbundteil hergestellt wird.

8. Verbundteil-Herstellungsverfahren nach einem der vorstehenden Ansprüche, wobei die Vakuumbeutelfolie (4) automatisch entfernt wird.

9. Verbundteil-Herstellungsverfahren nach einem der vorstehenden Ansprüche, wobei das Verbundlaminat (2) in einem Autoklaven oder in einem Ofen gehärtet wird.

10. Verbundteil-Herstellungsverfahren nach einem der vorstehenden Ansprüche, wobei, wenn die Fläche mit Harzresten etwa 1 % oder weniger der Fläche des entfernten Lüftungsgewebes (3) beträgt, die Harzreste nicht entfernt werden.

11. Verbundteil-Herstellungsverfahren nach einem der vorstehenden Ansprüche, wobei das entfernte Lüftungsgewebe (3) geschnitten wird, um zu dem weiteren herzustellenden Verbundteil zu passen, wobei der Schritt des Schneidens während des Lagerns oder während des Entfernens des Lüftungsgewebes (3) durchgeführt wird.

12. Verbundteil-Herstellungsverfahren nach einem der vorstehenden Ansprüche, wobei das weitere Verbundteil eine unebene Oberfläche umfasst.

## Revendications

1. Procédé de fabrication d'une pièce composite comprenant les étapes successives suivantes :
- fourniture d'un outillage de fabrication (1),
- fourniture d'un stratifié composite (2) sur l'outillage de fabrication (1),
- fourniture d'un film antiadhésif (6) recouvrant le stratifié composite (2),
- fourniture d'un tissu respirant (3) recouvrant le film antiadhésif (6), le tissu respirant (3) étant conçu pour faciliter l'aération lors d'un processus de cuisson,
- fourniture d'un film faisant poche à vide (4) recouvrant le stratifié composite (2), le film antiadhésif (6) et le tissu respirant (3),
- fermeture hermétique du film faisant poche à vide (4) sur l'outillage de fabrication (1),
- cuisson du stratifié composite (2),
- ouverture du film faisant poche à vide (4) de l'outillage de fabrication (1),
- retrait du film faisant poche sous vide (4),
- retrait du tissu respirant (3),
- inspection du tissu respirant (3) pour détecter des résidus de résine,
- le cas échéant, retrait des résidus de résine du tissu respirant (3),
- transport du tissu respirant retiré (3) jusqu'à un processus de fabrication d'une autre pièce composite,
**caractérisé en ce que** le film antiadhésif (6) est retiré après le transport du tissu respirant retiré (3) jusqu'au processus de fabrication d'une autre pièce composite.

2. Procédé de fabrication d'une pièce composite selon la revendication 1, qui comprend l'étape de fourniture d'une bande d'étanchéité (5) pour fermer hermétiquement le film faisant poche à vide (4) sur l'outillage de fabrication (1).

3. Procédé de fabrication d'une pièce composite selon la revendication 2, dans lequel la bande d'étanchéité (5) est positionnée sur l'outillage de fabrication (1) avant la fourniture du film antiadhésif (6).

4. Procédé de fabrication d'une pièce composite selon une quelconque revendication précédente, dans lequel l'étape de retrait du tissu respirant (3) est effectuée automatiquement ou manuellement par enroulement du tissu respirant (3).

5. Procédé de fabrication d'une pièce composite selon la revendication 4, dans lequel le tissu respirant retiré (3) est déroulé avant la fabrication de l'autre pièce composite.

6. Procédé de fabrication d'une pièce composite selon la revendication 4 ou 5, dans lequel le retrait du tissu respirant (3) est réalisé par enroulement automatique sur un rouleau (8) fixé à une grue à portique mue par un mouvement de translation le long d'un axe.

7. Procédé de fabrication d'une pièce composite selon une quelconque revendication précédente, dans lequel le tissu respirant retiré (3) est stocké avant la fabrication de l'autre pièce composite.

8. Procédé de fabrication d'une pièce composite selon une quelconque revendication précédente, dans lequel le film faisant poche à vide (4) est automatiquement retiré.

9. Procédé de fabrication d'une pièce composite selon une quelconque revendication précédente, dans lequel le stratifié composite (2) est durci dans un autoclave ou dans un four.

10. Procédé de fabrication d'une pièce composite selon une quelconque revendication précédente dans lequel, si la superficie avec résidus de résine représente environ 1 % ou moins de la superficie du tissu respirant retiré (3), les résidus de résine ne sont pas retirés.

11. Procédé de fabrication d'une pièce composite selon une quelconque revendication précédente, dans lequel on découpe le tissu respirant retiré (3) pour l'ajuster à l'autre pièce composite à fabriquer, l'étape de découpe étant réalisée lors du stockage ou pendant le retrait du tissu respirant (3).

12. Procédé de fabrication d'une pièce composite selon une quelconque revendication précédente, dans lequel l'autre pièce composite comprend une surface irrégulière.
